# EUROPEAN PATENT APPLICATION

(11) **EP 4 234 152 A1**
(43) Date of publication of application: **30.08.2023**
(21) Application number: 22382154.7
(22) Date of filing: 23.02.2022
(51) Int. Cl.: B23K 26/14, B23K 26/146, B23K 26/38

(54) **LASER HEAD WITH SWITCHED ASSIST GAS SUPPLY, METHOD AND SYSTEM FOR LASER DRILLING OR CUTTING WITH CONTROLLED ASSIST GAS SUPPLY**

(71) Applicant: Fundación Tekniker, 20600 Eibar (Guipuzkoa) (ES)
(72) Inventor: OCAÑA PEREZ, Roberto, 20600 Eibar (ES); ARIZAGA GURRUCHAGA, Asier, 20600 Eibar (ES)
(74) Representative: Balder IP Law, S.L.

(57) **Abstract**

The invention refers to a laser head (1) for a drilling or cutting tool, wherein the laser head (1) comprises: a nozzle (4) for the output of a laser beam, an inlet (7) arranged in the laser head (1) for injecting an assist gas or assist liquid into the nozzle (4), and a valve (8), preferably an piezoelectric valve, adapted for selectively closing and opening the inlet (7), so as to control the supply of assist gas or assist liquid into the nozzle (4), in a way that assist gas is used only while drilling or cutting a workpiece in order to reduce consumption of assist. The invention also refers to a system and a method for performing laser drilling or cutting works, with controlled assist gas supply.

## Description

### TECHNICAL FIELD

The present invention relates in general to gas-assisted laser drilling or cutting tools.

An object of the invention is to provide a laser head that reduces consumption of assist gas during drilling or cutting works.

The invention also refers to a system and a method for performing laser drilling or cutting works, with controlled assist gas supply.

### STATE OF THE ART

Laser tools are extensively used in manufacturing processes for drilling holes or cutting a workpiece. Conventionally, drilling or cutting laser tools include a laser head with one or more lenses to concentrate a laser beam on a desired area of a workpiece, and a cone-shaped nozzle for generating a high pressure flow of assist gas at the nozzle outlet, coaxial with the laser beam.

Assist gas is typically injected at high pressure to: remove molten material, create a local inert atmosphere and cool down the working area. In the particular case of micro-drilling, process takes about 400 µs to make a hole in a 0.8 mm Ti sheet, hence productivity rates of just under 1/400×10⁻⁶ holes per second can be theoretically achieved.

In the aeronautical sector, current productivity rates depend on other factors such as hole spacing and tool positioning speed, such that, productivity rates of 300 holes per second are achieved for the development of Hybrid Laminar Flow Technology (HLFC) structures. This means that while the laser process lasts only 400 µs, the time while a laser head moves between hole and hole is 1/300 = 3.333 ms. Once the hole has been formed by the laser pulse, the laser head is moved to the next working area, but during this time assist gas (usually Ar) continue to be expelled out of the nozzle, so that this period denotes the time during which assist gas is wasted because is not used at all.

Therefore, there is the need in this technical field for gas-assisted laser tools that reduce consumption of assist gas.

### DESCRIPTION OF THE INVENTION

The invention is defined in the attached independent claims, and satisfactorily solves the above-described drawbacks of the prior art, by the provision of a technique capable of highspeed switching a high pressure flow of assist gas, in order to control and reduce the consumption of assist gas.

The invention can also be applied to other flow-assisted laser processes, including those with liquid flow, such as water-jet-assisted laser cutting.

A first aspect of the invention refers to a laser head for a drilling or cutting tool, wherein the laser head conventionally comprises a nozzle for the output of a laser beam, and an inlet arranged in the laser head for injecting an assist gas or assist liquid into the nozzle, such that the assist gas or liquid can be expelled coaxially with the laser beam through a nozzle outlet.

According to the invention, the laser head integrates a valve adapted for selectively closing and opening the inlet, so as to accurately control the assist gas or assist liquid supply into the nozzle, in a way that that assist gas is used only while drilling or cutting the workpiece, thereby, reducing consumption of assist gas.

As an example, it can be mentioned that 16 bottles of 50 L at 200 Bar with a cost of 500 € are used to manufacture one microperforated sheet of 2 x 5 m of Ti for the application of HLFC, and that the invention is capable of reducing gas consumption by 50% by switching off the Ar flow in half of the drilling time between consecutive holes.

Preferably, the valve is implemented as a piezoelectric valve in order to achieve high precision and high speed in the closing and opening operation of the valve. An advantage of having a piezoelectric valve integrated in the laser head for controlling the supply of assist gas into the nozzle, is that the required assist gas pressure is reached almost instantaneously because the volume to be filled with gas before it comes out of the nozzle, is very small. As it is known for a skilled person in the art, the working principle of a piezoelectric valve or actuator is that by the application of a voltage to a piezoelectric material, this generates a high force displacement that is used to move an actuator. Typically, piezoelectric elements operate in the range of Khz frequencies.

In the present invention, the piezoelectric valve comprises a displaceable shutting member for example in the form of a needle, and a piezoelectric element arranged to move the shutting member for closing and opening the inlet upon the application of electric energy to the piezoelectric element.

Preferably, the piezoelectric element is embodied as a stack of individual piezoelectric pieces adjacent and in contact which each other, such the displacement distance of whole set of individual piezoelectric pieces, is the sum of the displacement of each individual piece. In this way, a displacement distance around 1 mm, can be achieved.

Conventionally, the laser head has a channel for the passage of a laser beam, such that the channel extends along a first axis (X1) and it is coaxial with the nozzle. According to the invention, the shutting member is displaceable along a second axis (X2) orthogonal to the first axis (X1).

Furthermore, the laser head comprises a connector for connecting the laser head to a source of assist gas typically stored in a tank, and the laser head further comprises a conduit communicating the connector with the nozzle.

Another aspect of the invention refers to a laser drilling or cutting tool, that comprises a laser source to generate a laser beam, and the laser head previously described for the passage of the laser beam. The tool further comprises a controller adapted for controlling the operation of the laser tool and the laser source to perform a drilling or cutting work, in a way that the laser source is activated to open a hole or cut a workpiece, and it is deactivated when the hole or cut has been completed, so that the tool can be moved to the next working area of the workpiece.

According to the invention, the controller is further adapted to control the operation of the valve coordinately with operation of the laser source, such that supply of assist gas or assist liquid to the nozzle is allowed when the tool is drilling or cutting a workpiece, and the supply of assist gas or assist liquid is impeded while the laser head moves from one drilling or cutting area of the workpiece to another drilling or cutting area of the workpiece, that is, there is no supply of assist gas while the tool is not drilling or cutting a workpiece.

For opening and closing the valve, the tool incorporates an electric energy source electrically connected to the piezoelectric member of the valve, and operable by the controller to open and close the valve. This can be implemented by means of a driver that amplifies a signal, for example a pulsed TTL signal, to a proper voltage to cause the piezoelectric element to move the desired distance.

Another aspect of the invention, refers to a method for drilling or cutting a workpiece using a gas assisted laser tool, wherein the method comprises the steps of:
- drilling a hole in a first working area of a workpiece by the simultaneous application of a laser beam and an assist gas,
- switching off the laser beam and moving a laser head of the tool to a second working area of the workpiece to drill a subsequent hole in the workpiece, and
- switching off the supply of assist gas while the laser head moves from the first working area to the second working area of the workpiece, such that, assist gas is used exclusively while drilling or cutting the workpiece, thereby, saving assist gas.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows in Figures 1A and 1B a perspective view and a side elevational view respectively, of a laser head according to the invention.
Figure 2.- shows in a cross-sectional view of the side elevational view of Figure 1B.

### DESCRIPTION OF WAYS OF CARRYING OUT THE INVENTION

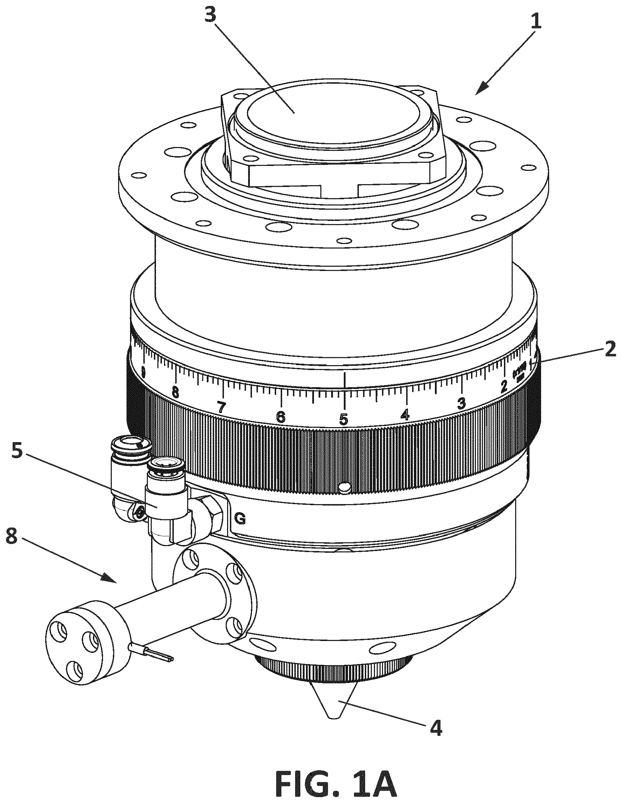

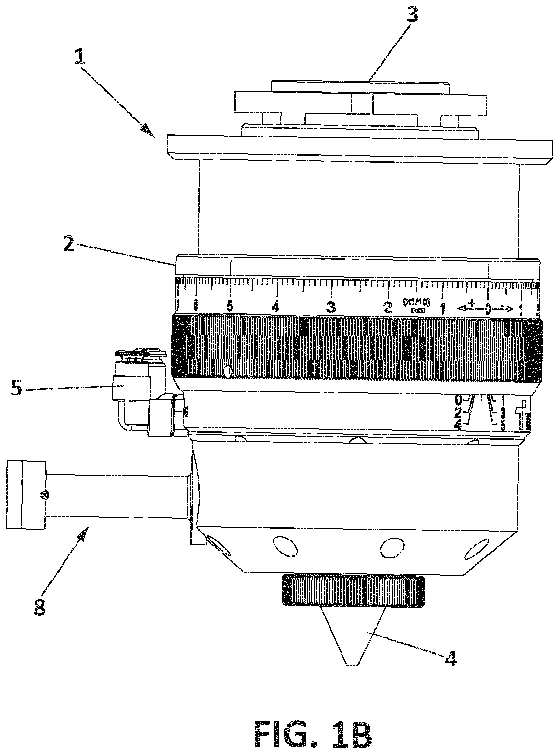

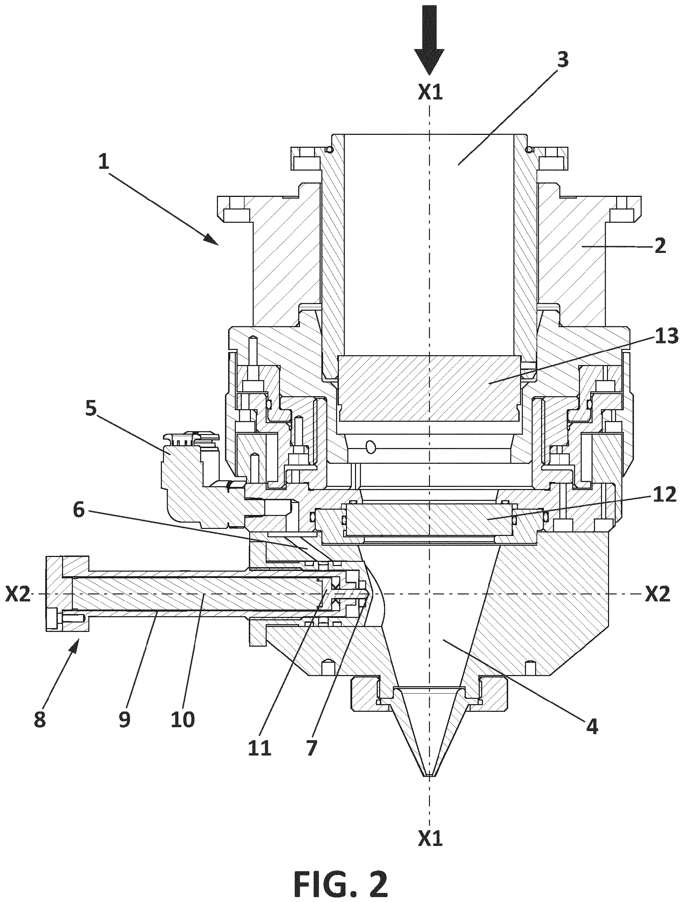

**Figures 1A****,** **1B** and **2** show a laser head (1) for a drilling or cutting tool, that conventionally comprises a laser head body (2) having internally a channel (3) extending along an axis (X1) for the passage of a laser beam, and a nozzle (4) at the bottom of the laser head body (2) and co-axial with the channel (3) for the output of the laser beam. The nozzle (4) is cone-shaped as illustrated specially in **Figure 2**, such that high-pressure assist gas is expelled coaxially with the laser beam through the nozzle's outlet.

The laser head (1) incorporates an optical window (12) placed in the channel (3) and upstream the nozzle (4), and a focusing lens (13) also placed in the channel (3) and upstream the optical window (12).

The laser head (1) has one connector (5) for its connection to a source of assist gas or assist liquid (not shown), and a conduit (6) communicating the connector (5) with the interior of the nozzle (4) through an inlet (7) that provides access to the nozzle's interior. A segment of the conduit (6) is inclined in relation to the first axis (X1).

The laser head (1) integrates a valve (8) adapted for selectively closing and opening the inlet (7), so as to control the supply of assist gas or assist liquid into the nozzle (4).

In the preferred embodiment shown in the figures, the valve (8) is a piezoelectric valve, which comprises a tube (9), a piezoelectric element (10) enclosed inside the tube (9), and a shutting element (11) in the form of a needle, and mechanically coupled with the piezoelectric member (10), so that the shutting member (11) is displaceable by the action of the piezoelectric element (10) is a known manner, by the application of a voltage to the piezo electric element (10).

Preferably, the piezoelectric element (10) is implemented as a stack of individual piezoelectric pieces, adjacent and in contact which each other, such the displacement distance of whole set of individual piezoelectric pieces, is the sum of the displacement of each individual piece.

The shutting member (11) is arranged to open and close the inlet (7), so as to allow or close the assist gas supply into the nozzle (4). As shown in **Figure 2****,** the piezoelectric element (10) is an elongated element that extends along a second axis (X2), and the shutting member (11) is displaceable along the second axis (X2), which, in the embodiment shown in **Figure 2** is orthogonal to the first axis (X1).

In other preferred embodiment of the invention, the piezoelectric element (10) and the shutting member (11) are inclined with respect to the first axis (X1), that is, the second axis (X2) forms and angle different than 90° with respect to the firs axis (X1).

In this text, terms such as first, second, third, etc. have been used herein to describe several devices, elements or parameters, it will be understood that the devices, elements or parameters should not be limited by these terms since the terms are only used to distinguish one device, element or parameter from another. For example, the first device could as well be named second device, and the second device could be named first device without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A laser head (1) for a drilling or cutting tool, the laser head (1) comprising:
a nozzle (4) for the output of a laser beam,
an inlet (7) arranged in the laser head (1) for injecting an assist gas or assist liquid into the nozzle (4), **characterized in that**,
the laser head (1) integrates a valve (8) adapted for selectively closing and opening the inlet (7), so as to control the supply of assist gas or assist liquid into the nozzle (4), and
wherein the valve (8) is a piezoelectric valve comprising a displaceable shutting member (11) and a piezoelectric element (10) arranged to move the shutting member (11) for closing and opening the inlet (7) upon the application of electric energy to the piezoelectric element (10).

2. A laser head according to claim 1, having a channel (3) for the passage of a laser beam, the channel (3) extending along a first axis (X1) and being coaxial with the nozzle (4), and wherein the shutting member (11) is displaceable along a second axis (X2).

3. A laser head according to claim 2, wherein the second axis (X2) is orthogonal or inclined in relation to the first axis (X1).

4. A laser head according to claim 2, further comprising a connector (5) for connecting the laser head (1) to a source of assist gas or assist liquid, the laser head further comprising a conduit (6) communicating the connector (5) with the nozzle (4), and wherein a segment of the conduit (5) is inclined in relation to the first axis (X1).

5. A laser head according to any of the preceding claims, wherein the piezoelectric element is a stack of individual piezoelectric pieces adjacent and in contact which each other, such the displacement distance of whole set of individual piezoelectric pieces, is the sum of the displacement of each individual piece.

6. A laser drilling or cutting tool comprising a laser source to generate a laser beam, and a laser head (1) as the one defined in any of the preceding claims for the passage of the laser beam, wherein the tool further comprises a controller adapted for controlling the operation of the laser source to perform a drilling or cutting work, and wherein the controller is further adapted to control the operation of the valve coordinately with the laser source such that supply of assist gas or assist liquid to the nozzle is allowed when the tool is drilling or cutting a workpiece, and the supply of assist gas or assist liquid is impeded while the laser head moves from one drilling or cutting area of the workpiece to another drilling or cutting area of the workpiece.

7. A laser drilling or cutting tool according to claim 6, further comprising an electric energy source electrically connected to the piezoelectric member (10) of the valve (8), and operable by the controller to open and close the valve (8).

8. Method for drilling or cutting a workpiece using a gas assisted laser tool, the method comprising the steps of:
- drilling a hole in a first working area of a workpiece by the simultaneous application of a laser beam and an assist gas,
- switching off the laser beam and moving a laser head (1) of the tool to a second working area of the workpiece to drill a subsequent hole in the workpiece,
- **characterized in that** the method comprises the step of switching off the supply of assist gas while the laser head (1) moves from the first working area to the second working area of the workpiece, such that assist gas is used exclusively while drilling or cutting the workpiece.
